# EUROPEAN PATENT SPECIFICATION

(11) **EP 3 824 040 B1**
(45) Date of publication and mention of the grant of the patent: **17.04.2024**
(21) Application number: 19749516.1
(22) Date of filing: 19.07.2019
(51) Int. Cl.: C09K 5/04, C10M 171/00, C10N 20/00, C10N 40/30

(54) **REFRIGERANT COMPOSITION**
KÜHLMITTELZUSAMMENSETZUNG
COMPOSITION RÉFRIGÉRANTE

(30) Priority: 20.07.2018 US 201862700929 P
(43) Date of publication of application: 26.05.2021
(73) Proprietor: The Chemours Company FC, LLC, Wilmington, Delaware 19801 (US)
(72) Inventor: MINOR, Barbara, Haviland, The Villages, Florida 32163 (US); PETROV, Viacheslav, A., Hockessin, Delaware 19707 (US)
(74) Representative: Abitz & Partner
(86) International application number: PCT/US2019/042503
(87) International publication number: WO 2020/018857

(56) References cited:
- CN-A- 107 365 568
- US-A1- 2017 321 099
- US-A1- 2018 030 325
- Anonymous: "Honeywell unveils non-flammable AC refrigerant with GWP of 733 | News | Refrigeration and Air Conditioning", , 28 June 2018 (2018-06-28), XP055630805, Retrieved from the Internet: URL:https://www.racplus.com/news/honeywell -unveils-non-flammable-ac-refrigerant-with -gwp-of-733/10032536.article [retrieved on 2019-10-10]

## Description

### FIELD

The present disclosure relates to compositions for use in refrigeration, air conditioning or heat pump systems. The compositions of the present invention are useful in methods for producing cooling and heating, and methods for replacing refrigerants and refrigeration, air conditioning and heat pump apparatus.

### BACKGROUND

Hydrofluoroolefins (HFOs) have been proposed as alternatives to replace chlorofluorocarbons (CFCs), hydrochlorofluorocarbons (HCFCs), and hydrofluorocarbons (HFCs) which can potentially damage the Earth's ozone layer and/or contribute to global warming. Hydrofluoroolefins do not contain chlorine, and, thus cannot degrade the Earth's ozone layer.

However, HFOs proposed such as 2,3,3,3-tetrafluoropropene and 1,3,3,3-tetrafluoropropene have reduced cooling capacity compared to the refrigerants they are intended to replace, such as R-410A. Thus, there is a need for higher cooling capacity alternatives which also provide good energy efficiency.

CN 107 365 568 A describes compositions comprising trifluoromethane, hexafluoroethane, as well as small amounts of trifluoroiodomethane, difluoromethane and pentafluoroethane. US 2017/321099 A1 describes compositions comprising trifluoroiodomethane, difluoromethane and pentafluoroethane.

### SUMMARY

The present invention relates to a composition comprising trifluoroiodomethane, difluoromethane, pentafluoroethane, and at least one of trifluoromethane and hexafluoroethane, wherein the trifluoroiodomethane is present in an amount of 25 weight percent to 50 weight percent, the difluoromethane is present in an amount of 35 weight percent to 50 weight percent, the pentafluoroethane is present in an amount of 5 weight percent to 15 weight percent, the trifluoromethane, if present, is present in an amount of 0.01 weight percent to 7 weight percent, and the hexafluoroethane, if present, is present in an amount of 0.01 weight percent to 12 weight percent, based on the total weight of the composition.

In an embodiment, said composition includs trifluoroiodomethane, difluoromethane, pentafluoroethane, and trifluoromethane.

In an embodiment, the present invention relates to a refrigeration, air conditioning, or heat pump system including said composition having trifluoroiodomethane, difluoromethane, pentafluoroethane, and hexafluoroethane.

In an embodiment, the present invention relates to a refrigeration, air conditioning, or heat pump system including said composition having trifluoroiodomethane, difluoromethane, pentafluoroethane, and trifluoromethane.

In an embodiment, said composition may further comprise 2,3,3,3-tetrafluoropropene or 1,3,3,3 -tetrafluoropropene.

In an embodiment, the present invention relates to a method of making a refrigerant composition including mixing 25 weight percent to 50 weight percent trifluoroiodomethane, 35 weight percent to 50 weight percent difluoromethane, 5 weight percent to 15 weight percent pentafluoroethane, and at least one of 0.01 weight percent to 12 weight percent hexafluoroethane or 0.01 weight percent to 7 weight percent trifluoromethane, based on the total weight of the composition, preferably at least one of 0.5 weight percent to 12 weight percent hexafluoroethane or 0.5 weight percent to 7 weight percent trifluoromethane, based on the total weight of the composition.

In an embodiment, the present invention relates to a method of making a refrigeration system coolant comprising blending 25 weight percent to 50 weight percent trifluoroiodomethane, 35 weight percent to 50 weight percent difluoromethane, 5 weight percent to 15 weight percent pentafluoroethane, and at least one of hexafluoroethane in an amount of 0.01 weight percent to 12 weight percent or trifluoromethane in an amount of 0.01 weight percent to 7 weight percent, based on the total weight of the composition, preferably at least one of hexafluoroethane in an amount of 0.5 weight percent to 12 weight percent or trifluoromethane in an amount of 0.5 weight percent to 7 weight percent, based on the total weight of the composition, and a lubricant.

These compositions provide increased cooling capacity.

In other embodiments, the present invention relates to a composition as described in claims 2 to 6 or to a method as described in claims 10 to 12.

Other features and advantages of the present invention will be apparent from the following more detailed description, taken in conjunction with the accompanying drawings which illustrate, by way of example, the principles of the invention.

### DETAILED DESCRIPTION

The foregoing general description and the following detailed description are exemplary and explanatory only and are not restrictive of the invention.

Before addressing details of embodiments described below, some terms are defined or clarified.

### Definitions:

As used herein, the term heat transfer fluid (also referred to as heat transfer medium) means a composition used to carry heat from a heat source to a heat sink. A heat source is defined as any space, location, object or body from which it is desirable to add, transfer, move or remove heat. Examples of heat sources are spaces (open or enclosed) requiring refrigeration or cooling, such as refrigerator or freezer cases in a supermarket, transport refrigerated containers, building spaces requiring air conditioning, industrial water chillers or the passenger compartment of an automobile requiring air conditioning. In some embodiments, the heat transfer composition may remain in a constant state throughout the transfer process (i.e., not evaporate or condense). In other embodiments, evaporative cooling processes may utilize heat transfer compositions as well. A heat sink is defined as any space, location, object or body capable of absorbing heat. A vapor compression refrigeration system is one example of such a heat sink.

A refrigerant is defined as a heat transfer fluid that undergoes a phase change from liquid to gas and back again during a cycle used to transfer of heat.

A heat transfer system is the system (or apparatus) used to produce a heating or cooling effect in a particular space. A heat transfer system may be a mobile system or a stationary system. Examples of heat transfer systems are any type of refrigeration systems and air conditioning systems including, but are not limited to, stationary heat transfer systems, air conditioners, freezers, refrigerators, heat pumps, chillers, including water chillers, flooded evaporator chillers, and direct expansion chillers, walk-in coolers, mobile refrigerators, mobile heat transfer systems, mobile air conditioning units, dehumidifiers, and combinations thereof. Refrigeration capacity (also referred to as cooling capacity) is a term which defines the change in enthalpy of a refrigerant in an evaporator per pound of refrigerant circulated, or the heat removed by the refrigerant in the evaporator per unit volume of refrigerant vapor exiting the evaporator (volumetric capacity).

The refrigeration capacity is a measure of the ability of a refrigerant or heat transfer composition to produce cooling. Therefore, the higher the capacity, the greater the cooling that is produced. Cooling rate refers to the heat removed by the refrigerant in the evaporator per unit time.

Coefficient of performance (COP) is the amount of heat removed divided by the required energy input to operate the cycle. The higher the COP, the higher is the energy efficiency. COP is directly related to the energy efficiency ratio (EER) that is the efficiency rating for refrigeration or air conditioning equipment at a specific set of internal and external temperatures.

The term "subcooling" refers to the reduction of the temperature of a liquid below that liquid's saturation point for a given pressure. The saturation point is the temperature at which the vapor is completely condensed to a liquid, but subcooling continues to cool the liquid to a lower temperature liquid at the given pressure. By cooling a liquid below the saturation temperature (or bubble point temperature), the net refrigeration capacity can be increased. Subcooling thereby improves refrigeration capacity and energy efficiency of a system. Subcool amount is the amount of cooling below the saturation temperature (in degrees).

Superheat is a term that defines how far above its saturation vapor temperature (the temperature at which, if the composition is cooled, the first drop of liquid is formed, also referred to as the "dew point") a vapor composition is heated.

Temperature glide (sometimes referred to simply as "glide") is the absolute value of the difference between the starting and ending temperatures of a phase-change process by a refrigerant within a component of a refrigerant system, exclusive of any subcooling or superheating. This term may be used to describe condensation or evaporation of a near azeotrope or non-azeotropic composition. When referring to the temperature glide of a refrigeration, air conditioning or heat pump system, it is common to provide the average temperature glide being the average of the temperature glide in the evaporator and the temperature glide in the condenser.

The net refrigeration effect is the quantity of heat that each kilogram of refrigerant absorbs in the evaporator to produce useful cooling. The mass flow rate is the quantity of refrigerant in kilograms circulating through the refrigeration, heat pump or air conditioning system over a given period of time.

As used herein, the term "lubricant" means any material added to a composition or a compressor (and in contact with any heat transfer composition in use within any heat transfer system) that provides lubrication to the compressor to aid in preventing parts from seizing.

As used herein, compatibilizers are compounds which improve solubility of the hydrofluorocarbon of the disclosed compositions in heat transfer system lubricants. In some embodiments, the compatibilizers improve oil return to the compressor. In some embodiments, the composition is used with a system lubricant to reduce oil-rich phase viscosity.

As used herein, oil-return refers to the ability of a heat transfer composition to carry lubricant through a heat transfer system and return it to the compressor. That is, in use, it is not uncommon for some portion of the compressor lubricant to be carried away by the heat transfer composition from the compressor into the other portions of the system. In such systems, if the lubricant is not efficiently returned to the compressor, the compressor will eventually fail due to lack of lubrication.

As used herein, "ultra-violet" dye is defined as a UV fluorescent or phosphorescent composition that absorbs light in the ultra-violet or "near" ultra-violet region of the electromagnetic spectrum. The fluorescence produced by the UV fluorescent dye under illumination by a UV light that emits at least some radiation with a wavelength in the range of from 10 nanometers to 775 nanometers may be detected.

Flammability is a term used to mean the ability of a composition to ignite and/or propagate a flame. For refrigerants and other heat transfer compositions, the lower flammability limit ("LFL") is the minimum concentration of the heat transfer composition in air that is capable of propagating a flame through a homogeneous mixture of the composition and air under test conditions specified in ASTM (American Society of Testing and Materials) E681-09 (2015). The upper flammability limit ("UFL") is the maximum concentration of the heat transfer composition in air that is capable of propagating a flame through a homogeneous mixture of the composition and air under the same test conditions. Determination of whether a refrigerant compound or mixture is flammable or non-flammable is also done by testing under the conditions of ASTM-E681-09 (2015).

During a refrigerant leak, lower boiling components of a mixture may leak preferentially. Thus, the composition in the system, as well as, the vapor leaking can vary over the time period of the leak. Thus, a non-flammable mixture may become flammable under leakage scenarios. And in order to be classified as non-flammable by ASHRAE (American Society of Heating, Refrigeration and Air-conditioning Engineers), a refrigerant or heat transfer composition must be non-flammable as formulated, but also under leakage conditions.

Global warming potential (GWP) is an index for estimating relative global warming contribution due to atmospheric emission of a kilogram of a particular greenhouse gas compared to emission of a kilogram of carbon dioxide. GWP can be calculated for different time horizons showing the effect of atmospheric lifetime for a given gas. The GWP for the 100 year time horizon is commonly the value referenced. For mixtures, a weighted average can be calculated based on the individual GWPs for each component.

Ozone depletion potential (ODP) is a number that refers to the amount of ozone depletion caused by a substance. The ODP is the ratio of the impact on ozone of a chemical compared to the impact of a similar mass of CFC-11 (fluorotrichloromethane). Thus, the ODP of CFC-11 is defined to be 1.0. Other CFCs and HCFCs have ODPs that range from 0.01 to 1.0. HFCs have zero ODP because they do not contain chlorine or other ozone depleting halogens.

2,3,3,3-tetrafluoropropene may also be referred to as HFO-1234yf, HFC-1234yf, or R1234yf. HFO-1234yf may be made by methods known in the art, such as by dehydrofluorination 1,1,1,2,3-pentafluoropropane (HFC-245eb) or 1,1,1,2,2-pentafluoropropane (HFC-245cb).

Difluoromethane (HFC-32 or R-32) is commercially available or may be made by methods known in the art, such as by dechlorofluorination of methylene chloride.

Pentafluoroethane (HFC-125 or R-125) is commercially available or may be made by methods known in the art, such as dechlorofluorination of 2,2-dichloro-1,1,1-trifluoroethane as described in US Patent No. 5,399,549.

Trifluoromethane (HFC-23 or R-23) is commercially available or may be made by methods known in the art.

1,1,1,2,2,2-hexafluoroethane, perfluoroethane, (FC-116) is commercially available or may be made by methods known in the art.

1,3,3,3-tetrafluoropropene (HFC-1234ze) is commercially available or may be made by methods known in the art.

As used herein, the terms "comprises" "comprising" "includes" "including" "has" "having" or any other variation thereof, are intended to cover a non-exclusive inclusion. For example, a composition, process, method, article, or apparatus that comprises a list of elements is not necessarily limited to only those elements but may include other elements not expressly listed or inherent to such composition, process, method, article, or apparatus.

The transitional phrase "consisting of" excludes any element, step, or ingredient not specified. If in the claim such would close the claim to the inclusion of materials other than those recited except for impurities ordinarily associated therewith. When the phrase "consists of" appears in a clause of the body of a claim, rather than immediately following the preamble, it limits only the element set forth in that clause; other elements are not excluded from the claim as a whole. The transitional phrase "consisting essentially of" is used to define a composition, method or apparatus that includes materials, steps, features, components, or elements, in addition to those literally disclosed provided that these additional included materials, steps, features, components, or elements do not materially affect the basic and novel characteristic(s) of the claimed invention.

The term "consisting essentially of" occupies a middle ground between "comprising" and "consisting of". Typically, components of the refrigerant mixtures and the refrigerant mixtures themselves can contain minor amounts (e.g., less than 0.5 weight percent total) of impurities and/or byproducts (e.g., from the manufacture of the refrigerant components or reclamation of the refrigerant components from other systems) which do not materially affect the novel and basic characteristics of the refrigerant mixture.

Where applicants have defined an invention or a portion thereof with an open-ended term such as "comprising", it should be readily understood that (unless otherwise stated) the description should be interpreted to also describe such an invention using the terms "consisting essentially of" or "consisting of". Also, use of "a" or "an" are employed to describe elements and components described herein. This is done merely for convenience and to give a general sense of the scope of the invention. This description should be read to include one or at least one and the singular also includes the plural unless it is obvious that it is meant otherwise.

Unless otherwise defined, all technical and scientific terms used herein have the same meaning as commonly understood by one of ordinary skill in the art to which this invention belongs. Although methods and materials similar or equivalent to those described herein can be used in the practice or testing of embodiments of the disclosed compositions, suitable methods and materials are described below.

The refrigerants industry has struggled to develop new refrigerant products that provide acceptable performance and environmental sustainability. Many applications require non-flammable refrigerant compositions and new global warming regulations may place a cap on global warming potential (GWP) for new refrigerant compositions. R-410A, which is a non-flammable blend of 50 weight percent HFC-32 and 50 weight percent HFC-125, is a refrigerant which has been used in air conditioners and heat pumps for many years. R-410A exhibits a high GWP and must be phased out and replaced.

The GWP of a refrigerant mixture is calculated as the weighted average of the GWP of each of the components. CF₃I, trifluoroiodomethane, is a low GWP flame suppressant with properties similar to HFC-32 and HFC-125. Inventive mixtures disclosed herein add CF₃I to refrigerant compositions including HFC-32 and HFC-125 to reduce the GWP of the composition while improving the refrigerant performance of the composition. In some embodiments, the GWP of the refrigerant mixture may be less than 1500, less the 1200, less than 1000, less than 875, less than 750, less than 500, less than 300, less than 150, less than 100, less than 70, less than 50, less than 30, less than 10, less than 5, and/or less than 1.

In an embodiment, a CF₃I containing refrigerant composition includes 25 weight percent to 50 weight percent, 30 weight percent to 45 weight percent, or 35 weight percent to 40 weight percent CF₃I; 35 weight percent to 50 weight percent, 40 weight percent to 50 weight percent, or 44 weight percent to 50 weight percent HFC-32; 5 weight percent to 15 weight percent, 8 weight percent to 12 weight percent, or 10 weight percent to 12 weight percent HFC-125; and 0.01 weight percent to 7 weight percent, 0.1 weight percent to 5 weight percent, or 0.3 weight percent to 1.5 weight percent of HFC-23.

In an embodiment, a CF₃I containing refrigerant composition includes 25 weight percent to 50 weight percent, 30 weight percent to 45 weight percent, or 35 weight percent to 40 weight percent CF₃I; 35 weight percent to 50 weight percent, 40 weight percent to 50 weight percent, or 44 weight percent to 50 weight percent HFC-32; 5 weight percent to 15 weight percent, 8 weight percent to 12 weight percent, or 10 weight percent to 12 weight percent HFC-125; and 0.01 weight percent to 12 weight percent, 0.1 weight percent to 10 weight percent, 0.3 weight percent to 5 weight percent, or 0.4 weight percent to 3 weight percent of FC-116.

In an embodiment, a CF₃I containing refrigerant composition includes 25 weight percent to 50 weight percent, 30 weight percent to 45 weight percent, or 35 weight percent to 40 weight percent CF₃I; 35 weight percent to 50 weight percent, 40 weight percent to 50 weight percent, or 44 weight percent to 50 weight percent HFC-32; 5 weight percent to 15 weight percent, 8 weight percent to 12 weight percent, or 10 weight percent to 12 weight percent HFC-125; 0.01 weight percent to 7 weight percent, 0.1 weight percent to 5 weight percent, 0.5 weight percent to 3 weight percent, or 1 weight percent to 2 weight percent of HFC-23; and 0.01 weight percent to 12 weight percent, 0.1 weight percent to 10 weight percent, 0.5 weight percent to 5 weight percent, or 1 weight percent to 4 weight percent of FC-116.

The CF₃I containing refrigerant composition may include additional refrigerants. In some embodiments, the CF₃I containing refrigerant composition may additionally include from 0.01 weight percent to 12 weight percent, 0.1 weight percent to 10 weight percent, 0.3 weight percent to 5 weight percent, or 0.4 weight percent to 3 weight percent of HFO-1234yf. In some embodiments, the CF₃I containing refrigerant composition may additionally include from 0.01 weight percent to 12 weight percent, 0.1 weight percent to 10 weight percent, 0.3 weight percent to 5 weight percent, or 0.4 weight percent to 3 weight percent of HFO-1234ze. In some embodiments, the CF₃I containing refrigerant composition may additionally include both the HFO-1234yf and HFO-1234ze.

The disclosed compositions may comprise optional non- refrigerant components. In some embodiments, the optional non-refrigerant components (also referred to herein as additives) in the compositions disclosed herein may comprise one or more components selected from the group consisting of lubricants, dyes (including UV dyes), solubilizing agents, compatibilizers, stabilizers, tracers, perfluoropolyethers, anti-wear agents, extreme pressure agents, corrosion and oxidation inhibitors, metal surface energy reducers, metal surface deactivators, free radical scavengers, foam control agents, viscosity index improvers, pour point depressants, detergents, viscosity adjusters, and mixtures thereof. Indeed, many of these optional non- refrigerant components fit into one or more of these categories and may have qualities that lend themselves to achieve one or more performance characteristic.

In some embodiments, one or more non-refrigerant components are present in small amounts relative to the overall composition. In some embodiments, the amount of additive(s) concentration in the disclosed compositions is from less than 0.1 weight percent to as much as 5 weight percent of the total composition. In some embodiments of the present invention, the additives are present in the disclosed compositions in an amount between 0.1 weight percent to 5 weight percent of the total composition or in an amount between 0.1 weight percent to 3.5 weight percent. The additive component(s) selected for the disclosed composition is selected on the basis of the utility and/or individual equipment components or the system requirements.

In one embodiment, the lubricant is selected from the group consisting of mineral oil, alkylbenzene, polyol esters, polyalkylene glycols, polyvinyl ethers, polycarbonates, perfluoropolyethers, silicones, silicate esters, phosphate esters, paraffins, naphthenes, polyalphaolefins, and combinations thereof.

The lubricants as disclosed herein may be commercially available lubricants. For instance, the lubricant may be paraffinic mineral oil, sold by BVA Oils as BVM 100 N, naphthenic mineral oils sold by Crompton Co. under the trademarks Suniso^{®} 1 GS, Suniso^{®} 3GS and Suniso^{®} 5GS, naphthenic mineral oil sold by Pennzoil under the trademark Sontex^{®} 372LT, naphthenic mineral oil sold by Calumet Lubricants under the trademark Calumet^{®} RO-30,, linear alkylbenzenes sold by Shrieve Chemicals under the trademarks Zerol^{®} 75, Zerol^{®} 150 and Zerol^{®} 500 and branched alkylbenzene sold by Nippon Oil as HAB 22, polyol esters (POEs) sold under the trademark Castrol^{®} 100 by Castrol, United Kingdom, polyalkylene glycols (PAGs) such as RL-488A from Dow (Dow Chemical, Midland, Michigan), and mixtures thereof, meaning mixtures of any of the lubricants disclosed in this paragraph. In the compositions of the present invention including a lubricant, the lubricant is present in an amount of less than 40.0 weight percent to the total composition. In other embodiments, the amount of lubricant is less than 20 weight percent of the total composition. In other embodiments, the amount of lubricant is less than 10 weight percent of the total composition. In other embodiments, the amount of lubricant is between 0.1 and 5.0 weight percent of the total composition.

Notwithstanding the above weight ratios for compositions disclosed herein, it is understood that in some heat transfer systems, while the composition is being used, it may acquire additional lubricant from one or more equipment components of such heat transfer system. For example, in some refrigeration, air conditioning and heat pump systems, lubricants may be charged in the compressor and/or the compressor lubricant sump. Such lubricant would be in addition to any lubricant additive present in the refrigerant in such a system. In use, the refrigerant composition when in the compressor may pick up an amount of the equipment lubricant to change the refrigerant-lubricant composition from the starting ratio.

The non-refrigerant component used with the compositions of the present invention may include at least one dye. The dye may be at least one ultra- violet (UV) dye. The UV dye may be a fluorescent dye. The fluorescent dye may be selected from the group consisting of naphthalimides, perylenes, coumarins, anthracenes, phenanthracenes, xanthenes, thioxanthenes, naphthoxanthenes, fluoresceins, and derivatives of said dye, and combinations thereof, meaning mixtures of any of the foregoing dyes or their derivatives disclosed in this paragraph.

In some embodiments, the disclosed compositions contain from 0.001 weight percent to 1.0 weight percent UV dye. In other embodiments, the UV dye is present in an amount of from 0.005 weight percent to 0.5 weight percent; and in other embodiments, the UV dye is present in an amount of from 0.01 weight percent to 0.25 weight percent of the total composition. UV dye is a useful component for detecting leaks of the composition by permitting one to observe the fluorescence of the dye at or in the vicinity of a leak point in an apparatus (e.g., refrigeration unit, air-conditioner or heat pump). The UV emission, e.g., fluorescence from the dye may be observed under an ultra-violet light. Therefore, if a composition containing such a UV dye is leaking from a given point in an apparatus, the fluorescence can be detected at the leak point, or in the vicinity of the leak point.

Another non-refrigerant component which may be used with the compositions of the present invention may include at least one solubilizing agent selected to improve the solubility of one or more dye in the disclosed compositions. In some embodiments, the weight ratio of dye to solubilizing agent ranges from 99:1 to 1:1. The solubilizing agents include at least one compound selected from the group consisting of hydrocarbons, hydrocarbon ethers, polyoxyalkylene glycol ethers (such as dipropylene glycol dimethyl ether), amides, nitriles, ketones, chlorocarbons (such as methylene chloride, trichloroethylene, chloroform, or mixtures thereof), esters, lactones, aromatic ethers, fluoroethers and 1,1,1-trifluoroalkanes and mixtures thereof, meaning mixtures of any of the solubilizing agents disclosed in this paragraph. In some embodiments, the non-refrigerant component comprises at least one compatibilizer to improve the compatibility of one or more lubricants with the disclosed compositions. The compatibilizer may be selected from the group consisting of hydrocarbons, hydrocarbon ethers, polyoxyalkylene glycol ethers (such as dipropylene glycol dimethyl ether), amides, nitriles, ketones, chlorocarbons (such as methylene chloride, trichloroethylene, chloroform, or mixtures thereof), esters, lactones, aromatic ethers, fluoroethers, 1,1,1-trifluoroalkanes, and mixtures thereof, meaning mixtures of any of the compatibilizers disclosed in this paragraph.

The solubilizing agent and/or compatibilizer may be selected from the group consisting of hydrocarbon ethers consisting of the ethers containing only carbon, hydrogen and oxygen, such as dimethyl ether (DME) and mixtures thereof, meaning mixtures of any of the hydrocarbon ethers disclosed in this paragraph. The compatibilizer may be linear or cyclic aliphatic or aromatic hydrocarbon compatibilizer containing from 3 to 15 carbon atoms. The compatibilizer may be at least one hydrocarbon, which may be selected from the group consisting of at least propanes, including propylene and propane, butanes, including n-butane and isobutene, pentanes, including n-pentane, isopentane, neopentane and cyclopentane, hexanes, octanes, nonane, and decanes, among others. Commercially available hydrocarbon compatibilizers include but are not limited to those from Exxon Chemical (USA) sold under the trademarks Isopar^{®} H, a mixture of undecane (Cn) and dodecane (C12) (a high purity C11 to C12 iso-paraffinic), Aromatic 150 (a C9 to C11 aromatic) (, Aromatic 200 (a C9 to C15 aromatic) and Naptha 140 (a mixture of C5 to C11 paraffins, naphthenes and aromatic hydrocarbons) and mixtures thereof, meaning mixtures of any of the hydrocarbons disclosed in this paragraph.

The compatibilizer may alternatively be at least one polymeric compatibilizer. The polymeric compatibilizer may be a random copolymer of fluorinated and non-fluorinated acrylates, wherein the polymer comprises repeating units of at least one monomer represented by the formulae CH₂=C(R¹)C0₂R², CH₂=C(R³)C₆H₄R⁴, and CH₂=C(R⁵)C₆H₄XR⁶, wherein X is oxygen or sulfur; R¹, R³, and R⁵ are independently selected from the group consisting of H and C1-C4 alkyl radicals; and R², R⁴, and R⁶ are independently selected from the group consisting of carbon-chain-based radicals containing C, and F, and may further contain H, Cl, ether oxygen, or sulfur in the form of thioether, sulfoxide, or sulfone groups and mixtures thereof. Examples of such polymeric compatibilizers include those commercially available from E. I. du Pont de Nemours and Company, (Wilmington, DE, 19898, USA) under the trademark Zonyl^{®} PHS. Zonyl^{®} PHS is a random copolymer made by polymerizing 40 weight percent CH₂=C(CH₃)C0₂CH₂CH₂(CF₂CF₂)mF (also referred to as Zonyl^{®} fluoromethacrylate or ZFM) wherein m is from 1 to 12, primarily 2 to 8, and 60 weight percent lauryl methacrylate (CH₂=C(CH3)C0₂(CH₂)nCH3, also referred to as LMA). In some embodiments, the compatibilizer component contains from 0.01 to 30 weight percent (based on total amount of compatibilizer) of an additive which reduces the surface energy of metallic copper, aluminum, steel, or other metals and metal alloys thereof found in heat exchangers in a way that reduces the adhesion of lubricants to the metal. Examples of metal surface energy reducing additives include those commercially available from DuPont under the trademarks Zonyl^{®} FSA, Zonyl^{®} FSP, and Zonyl^{®} FSJ.

Another non-refrigerant component which may be used with the compositions of the present invention may be a metal surface deactivator. The metal surface deactivator is selected from the group consisting of areoxalyl bis (benzylidene) hydrazide (CAS reg no. 6629-10-3), N,N'-bis(3,5-di-tert-butyl-4-hydroxyhydrocinnamoylhydrazine (CAS reg no. 32687-78-8) , 2,2' - oxamidobis-ethyl-(3,5-di-tert-butyl-4-hydroxyhydrocinnamate (CAS reg no. 70331-94-1 ), N,N'-(disalicyclidene)-1,2-diaminopropane (CAS reg no. 94-91-7) and ethylenediaminetetra-acetic acid (CAS reg no. 60-00-4) and its salts, and mixtures thereof, meaning mixtures of any of the metal surface deactivators disclosed in this paragraph.

The non-refrigerant component used with the compositions of the present invention may alternatively be a stabilizer selected from the group consisting of hindered phenols, thiophosphates, butylated triphenylphosphorothionates, organo phosphates, or phosphites, aryl alkyl ethers, terpenes, terpenoids, epoxides, fluorinated epoxides, oxetanes, ascorbic acid, thiols, lactones, thioethers, amines, nitromethane, alkylsilanes, benzophenone derivatives, aryl sulfides, divinyl terephthalic acid, diphenyl terephthalic acid, ionic liquids, and mixtures thereof, meaning mixtures of any of the stabilizers disclosed in this paragraph.

The stabilizer may be selected from the group consisting of tocopherol; hydroquinone; t-butyl hydroquinone; monothiophosphates; and dithiophosphates, commercially available from Ciba Specialty Chemicals, Basel, Switzerland, hereinafter "Ciba", under the trademark Irgalube^{®} 63; dialkylthiophosphate esters, commercially available from Ciba under the trademarks Irgalube^{®} 353 and Irgalube^{®} 350, respectively; butylated triphenylphosphorothionates, commercially available from Ciba under the trademark Irgalube^{®} 232; amine phosphates, commercially available from Ciba under the trademark Irgalube^{®} 349 (Ciba); hindered phosphites, commercially available from Ciba as Irgafos^{®} 168 and Tris-(di-tert-butylphenyl)phosphite, commercially available from Ciba under the trademark Irgafos^{®} OPH; (Di-n-octyl phosphite); and iso-decyl diphenyl phosphite, commercially available from Ciba under the trademark Irgafos^{®} DDPP; trialkyi phosphates, such as trimethyl phosphate, triethylphosphate, tributyl phosphate, trioctyl phosphate, and tri(2-ethylhexyl)phosphate; triaryl phosphates including triphenyl phosphate, tricresyl phosphate, and trixylenyl phosphate; and mixed alkyl-aryl phosphates including isopropylphenyl phosphate (IPPP), and bis(t-butylphenyl)phenyl phosphate (TBPP); butylated triphenyl phosphates, such as those commercially available under the trademark Syn-O-Ad^{®} including Syn-O-Ad^{®} 8784; tert-butylated triphenyl phosphates such as those commercially available under the trademark Durad^{®}620; isopropylated triphenyl phosphates such as those commercially available under the trademarks Durad^{®} 220 and Durad^{®}110; anisole; 1,4- dimethoxybenzene; 1,4-diethoxybenzene; 1,3,5-trimethoxybenzene; myrcene, alloocimene, limonene (in particular, d-limonene); retinal; pinene; menthol; geraniol; farnesol; phytol; Vitamin A; terpinene; delta-3-carene; terpinolene; phellandrene; fenchene; dipentene; caratenoids, such as lycopene, beta carotene, and xanthophylls, such as zeaxanthin; retinoids, such as hepaxanthin and isotretinoin; bornane; 1,2-propylene oxide; 1,2-butylene oxide; n-butyl glycidyl ether; trifluoromethyloxirane; 1,1-bis(trifluoromethyl)oxirane; 3-ethyl-3-hydroxymethyl-oxetane, such as OXT-101 (Toagosei Co., Ltd); 3-ethyl-3-((phenoxy)methyl)-oxetane, such as OXT-211 (Toagosei Co., Ltd); 3-ethyl-3-((2-ethyl-hexyloxy)methyl)-oxetane, such as OXT-212 (Toagosei Co., Ltd); ascorbic acid; methanethiol (methyl mercaptan); ethanethiol (ethyl mercaptan); Coenzyme A; dimercaptosuccinic acid (DMSA); grapefruit mercaptan ((R)-2-(4-methylcyclohex-3-enyl)propane- 2-thiol)); cysteine ((R)-2-amino-3-sulfanyl-propanoic acid); lipoamide (1 ,2-dithiolane-3-pentanamide); 5,7-bis(1,1-dimethylethyl)-3-[2,3(or 3,4)- dimethylphenyl]-2(3H)-benzofuranone, commercially available from Ciba under the trademark Irganox^{®} HP-136; benzyl phenyl sulfide; diphenyl sulfide; diisopropylamine; dioctadecyl 3,3'-thiodipropionate, commercially available from Ciba under the trademark Irganox^{®} PS 802 (Ciba); didodecyl 3,3'-thiopropionate, commercially available from Ciba under the trademark Irganox^{®} PS 800; di-(2,2,6,6-tetramethyl-4-piperidyl)sebacate, commercially available from Ciba under the trademark Tinuvin^{®} 770; poly-(N-hydroxyethyl- 2,2,6,6-tetramethyl-4-hydroxy-piperidyl succinate, commercially available from Ciba under the trademark Tinuvin^{®} 622LD (Ciba); methyl bis tallow amine; bis tallow amine; phenol-alpha-naphthylamine; bis(dimethylamino)methylsilane (DMAMS); tris(trimethylsilyl)silane (TTMSS); vinyltriethoxysilane; vinyltrimethoxysilane; 2,5-difluorobenzophenone; 2', 5'- dihydroxyacetophenone; 2-aminobenzophenone; 2-chlorobenzophenone; benzyl phenyl sulfide; diphenyl sulfide; dibenzyl sulfide; ionic liquids; and mixtures and combinations thereof.

The additive used with the compositions of the present invention may alternatively be an ionic liquid stabilizer. The ionic liquid stabilizer may be selected from the group consisting of organic salts that are liquid at room temperature (approximately 25 °C), those salts containing cations selected from the group consisting of pyridinium, pyridazinium, pyrimidinium, pyrazinium, imidazolium, pyrazolium, thiazolium, oxazolium and triazolium and mixtures thereof; and anions selected from the group consisting of [BF₄]-, [PFe]-, [SbFe]-, [CF₃SO₃]-, [HCF₂CF₂SO₃]-, [CF₃HFCCF₂SO₃]-, [HCCIFCF₂SO₃]-, [(CF₃SO₂)₂N]-, [(CF₃CF₂SO₂)₂N]-, [(CF₃SO₂)₃C]-, [CF₃CO₂]-, and F- and mixtures thereof. In some embodiments, ionic liquid stabilizers are selected from the group consisting of emim BF₄ (1-ethyl-3-methylimidazolium tetrafluoroborate); bmim BF₄ (1 -butyl-3-methylimidazolium tetraborate); emim PF₆ (1-ethyl-3-methylimidazolium hexafluorophosphate); and bmim PF₆ (1-butyl-3-methylimidazolium hexafluorophosphate), all of which are available from Fluka (Sigma-Aldrich).

In some embodiments, the stabilizer may be a hindered phenol, which is any substituted phenol compound, including phenols comprising one or more substituted or cyclic, straight chain, or branched aliphatic substituent group, such as, alkylated monophenols including 2,6-di-tert-butyl-4-methylphenol; 2,6-di-tert-butyl-4-ethylphenol; 2,4-dimethyl-6-tertbutylphenol; tocopherol; and the like, hydroquinone and alkylated hydroquinones including t-butyl hydroquinone, other derivatives of hydroquinone; and the like, hydroxylated thiodiphenyl ethers, including 4,4'-thio-bis(2-methyl-6-tert-butylphenol); 4,4'-thiobis(3-methyl-6-tertbutylphenol); 2,2'-thiobis(4methyl-6-tert-butylphenol); and the like, alkylidene-bisphenols including,: 4,4'-methylenebis(2,6-di-tert-butylphenol); 4,4'-bis(2,6-di-tert-butylphenol); derivatives of 2,2'- or 4,4-biphenoldiols; 2,2'-methylenebis(4-ethyl-6-tertbutylphenol); 2,2'-methylenebis(4-methyl-6-tertbutylphenol); 4,4-butylidenebis(3-methyl-6-tert- butylphenol); 4,4-isopropylidenebis(2,6-di-tert-butylphenol); 2,2'-methylenebis(4-methyl-6-nonylphenol); 2,2'-isobutylidenebis(4,6-dimethylphenol; 2,2'-methylenebis(4-methyl-6-cyclohexylphenol, 2,2- or 4,4-biphenyldiols including 2,2'-methylenebis(4-ethyl-6-tert-butylphenol); butylated hydroxytoluene (BHT, or 2,6-di-tert-butyl-4-methylphenol), bisphenols comprising heteroatoms including 2,6-di-tert-alpha-dimethylamino-p-cresol, 4,4-thiobis(6-tert-butyl-m-cresol); and the like; acylaminophenols; 2,6-di-tert-butyl-4(N,N'-dimethylaminomethylphenol); sulfides including; bis(3-methyl-4-hydroxy-5-tert-butylbenzyl)sulfide; bis(3,5- di-tert-butyl-4-hydroxybenzyl)sulfide and mixtures thereof, meaning mixtures of any of the phenols disclosed in this paragraph. The non-refrigerant component which is used with compositions of the present invention may alternatively be a tracer. The tracer may be two or more tracer compounds from the same class of compounds or from different classes of compounds. In some embodiments, the tracer is present in the compositions at a total concentration of 50 parts per million by weight (ppm) to 1000 ppm, based on the weight of the total composition. In other embodiments, the tracer is present at a total concentration of 50 ppm to 500 ppm. Alternatively, the tracer is present at a total concentration of 100 ppm to 300 ppm.

The tracer may be selected from the group consisting of hydrofluorocarbons (HFCs), deuterated hydrofluorocarbons, perfluorocarbons, fluoroethers, brominated compounds, iodated compounds, alcohols, aldehydes and ketones, nitrous oxide and combinations thereof. Alternatively, the tracer may be selected from the group consisting of fluoroethane, 1,1-difluoroethane, 1,1,1-trifluoroethane, 1,1,1,3,3,3-hexafluoropropane, 1,1,1,2,3,3,3-heptafluoropropane, 1,1,1,3,3-pentafluoropropane, 1,1,1,3,3-pentafluorobutane, 1,1,1,2,3,4,4,5,5,5-decafluoropentane, 1,1,1,2,2,3,4,5,5,6,6,7,7,7-tridecafluoroheptane, iodotrifluoromethane, deuterated hydrocarbons, deuterated hydrofluorocarbons, perfluorocarbons, fluoroethers, brominated compounds, iodated compounds, alcohols, aldehydes, ketones, nitrous oxide (N₂O) and mixtures thereof. In some embodiments, the tracer is a blend containing two or more hydrofluorocarbons, or one hydrofluorocarbon in combination with one or more perfluorocarbons.

The tracer may be added to the compositions of the present invention in predetermined quantities to allow detection of any dilution, contamination or other alteration of the composition.

The additive which may be used with the compositions of the present invention may alternatively be a perfluoropolyether as described in detail in US2007-0284555.

It will be recognized that certain of the additives referenced above as suitable for the non-refrigerant component have been identified as potential refrigerants. However, in accordance with this invention, when these additives are used, they are not present at an amount that would affect the novel and basic characteristics of the refrigerant mixtures of this invention. Preferably, the refrigerant mixtures and the compositions of this invention containing them, contain no more than 0.5 weight percent of the refrigerants other than HFC-32, HFC-125, HFC-23, FC-116, HFO-1234yf, HFO-1234ze, and CF₃I. In one embodiment, the compositions disclosed herein may be prepared by any convenient method to combine the desired amounts of the individual components. A preferred method is to weigh the desired component amounts and thereafter combine the components in an appropriate vessel. Agitation may be used, if desired. Compositions of the present invention have zero ozone depletion potential and low global warming potential (GWP). Additionally, the compositions of the present invention will have global warming potentials that are less than many hydrofluorocarbon refrigerants currently in use.

Provided herein, in one embodiment is a refrigeration, air conditioning, or heat pump system comprising the compositions of the present invention. The refrigeration, air conditioning, or heat pump systems comprise an evaporator, compressor, condenser, and expansion device.

It has been found that the compositions of the present invention will have some temperature glide in the heat exchangers. Thus, the systems will operate more efficiently if the heat exchangers are operated in counter-current mode or cross-current mode with counter-current tendency. Counter- current tendency means that the closer the heat exchanger can get to counter-current mode the more efficient the heat transfer. Thus, air conditioning heat exchangers, in particular evaporators, are designed to provide some aspect of counter-current tendency. Therefore, provided herein is an air conditioning or heat pump system wherein said system includes one or more heat exchangers (either evaporators, condensers or both) that operate in counter-current mode or cross-current mode with counter-current tendency. In another embodiment, provided herein is a refrigeration system wherein said system includes one or more heat exchangers (either evaporators, condensers or both) that operate in counter-current mode or cross-current mode with counter-current tendency. In one embodiment, the refrigeration, air conditioning or heat pump system is a stationary refrigeration, air conditioning or heat pump system. In another embodiment the refrigeration, air conditioning or heat pump system is a mobile refrigeration, air conditioning or heat pump system.

Additionally, in some embodiments, the disclosed compositions may function as primary refrigerants in secondary loop systems that provide cooling to remote locations by use of a secondary heat transfer fluid, which may comprise water, an aqueous salt solution (e.g., calcium chloride), a glycol, carbon dioxide, or a fluorinated hydrocarbon fluid. In this case the secondary heat transfer fluid is the body to be cooled as it is adjacent to the evaporator and is cooled before moving to a second remote body to be cooled.

Examples of air conditioning or heat pump systems include but are not limited to air conditioners, residential heat pumps, chillers, including flooded evaporator chillers and direct expansion chillers, mobile air conditioning units, dehumidifiers, and combinations thereof.

As used herein, mobile refrigeration, air conditioning or heat pump systems refers to any refrigeration, air conditioner or heat pump apparatus incorporated into a transportation unit for the road, rail, sea or air. Mobile air conditioning or heat pumps systems may be used in automobiles, trucks, railcars or other transportation systems. Mobile refrigeration may include transport refrigeration in trucks, airplanes, or rail cars. In addition, apparatus which are meant to provide refrigeration for a system independent of any moving carrier, known as "intermodal" systems, are including in the present inventions. Such intermodal systems include "containers" (combined sea/land transport) as well as "swap bodies" (combined road and rail transport). As used herein, stationary air conditioning or heat pump systems are systems that are fixed in place during operation. A stationary air conditioning or heat pump system may be associated within or attached to buildings of any variety. These stationary applications may be stationary air conditioning and heat pumps, including but not limited to chillers, heat pumps, including residential and high temperature heat pumps, residential, commercial or industrial air conditioning systems, and including window, ductless, ducted, packaged terminal, and those exterior but connected to the building such as rooftop systems. Examples of refrigeration systems the disclosed compositions may be useful in are equipment including commercial, industrial or residential refrigerators and freezers, ice machines, self-contained coolers and freezers, flooded evaporator chillers, direct expansion chillers, walk-in and reach-in coolers and freezers, and combination systems. In some embodiments, the disclosed compositions may be used in supermarket refrigeration systems. Additionally, stationary applications may utilize a secondary loop system that uses a primary refrigerant to produce cooling in one location that is transferred to a remote location via a secondary heat transfer fluid.

In an embodiment, a method of making a refrigerant composition including mixing 25 weight percent to 50 weight percent trifluoroiodomethane, 35 weight percent to 50 weight percent difluoromethane, 5 weight percent to 15 weight percent pentafluoroethane, and at least one of 0.01 weight percent to 12 weight percent hexafluoroethane or 0.01 weight percent to 7 weight percent trifluoromethane, based on the total weight of the composition. The components may be mixed in an appropriate container such as a steel cylinder designed to hold a composition that is a liquified gas under pressure.

In an embodiment, a method of making a refrigeration system coolant comprising blending 25 weight percent to 50 weight percent trifluoroiodomethane, 35 weight percent to 50 weight percent difluoromethane, 5 weight percent to 15 weight percent pentafluoroethane, and at least one of hexafluoroethane in an amount of 0.01 weight percent to 12 weight percent or trifluoromethane in an amount of 0.01 weight percent to 7 weight percent, based on the total weight of the composition, and a lubricant.

### EXAMPLES

Table 1 and Table 2 below summarize the properties of various CF₃I containing refrigerant compositions and cooling performance in comparison to the conventional R-410A refrigerant. Performance shown represents air conditioning or high temperature refrigeration conditions. Evap P is evaporator pressure, Cond P is condenser pressure, Disch T is compressor discharge temperature, Avg Glide is the average temperature glide of the evaporator and condenser, CAP is the volumetric cooling capacity and COP is the coefficient of performance. Where applicable, data is relative to R-410A. AR4 GWP is the 100-year global warming potential according the Intergovernmental Panel on Climate Change (IPCC) fourth assessment report (2007) for R-32 and R-125. CF₃I was assumed to have a GWP of 1.

Condenser temperature was set at 40°C, evaporator temperature at 5°C, Subcool amount was 5K, return gas suction temperature was 18°C and compressor isentropic efficiency was 70%.

### Conditions:

Condenser Temperature = 40°C
Evaporator Temperature = 4°C
Subcool amount 5 K
Return Gas Temperature = 18°C
Compressor Efficiency 70%

**Table 1**

| **Blend** | **Weight percent** | | | | **AR4 GWP** | **Evap P Rel to 410A** | **Cond P Rel to 410A** | **Disch T (°C)** | **Avg Temp Glid e (K)** | **Cap Rel to 410A (%)** | **COP Rel to 410A (%)** |
|---|---|---|---|---|---|---|---|---|---|---|---|
| | **R32** | **R125** | **CF₃I** | **R23** | | | | | | | |
| 410A | 50 | 50 | | | 2088 | 100% | 100% | 79.9 | 0.10 | 100.0 | 100.0 |
| CF₃I Blend | 49 | 11.5 | 39.5 | | 734 | 105% | 102% | 85.9 | 0.23 | 103.0 | 99.3 |
| Blend + 0.1% R-23 | 48.95 | 11.49 | 39.46 | 0.1 | 748 | 105% | 102% | 85.9 | 0.26 | 103.1 | 99.3 |
| Blend + 0.5% R-23 | 48.76 | 11.44 | 39.30 | 0.5 | 804 | 106% | 103% | 85.9 | 0.40 | 103.6 | 99.2 |
| Blend + 1% R-23 | 48.51 | 11.39 | 39.11 | 1 | 874 | 106% | 104% | 86.0 | 0.55 | 104.2 | 99.1 |
| Blend + 3% R-23 | 47.53 | 11.16 | 38.31 | 3 | 1156 | 109% | 107% | 86.0 | 1.18 | 106.4 | 98.5 |
| Blend + 5% R-23 | 46.55 | 10.93 | 37.53 | 5 | 1437 | 112% | 110% | 86.0 | 1.74 | 108.7 | 98.0 |

### Conditions:

Condenser Temperature = 40°C
Evaporator Temperature = 4°C
Subcool amount 5 K
Return Gas Temperature = 18°C
Compressor Efficiency 70%

**Table 2**

| **Blend** | **Weight percent** | | | | **AR4 GWP** | **Evap P Rel to 410A (%)** | **Cond P Rel to 410A (%)** | **Disch T (°C)** | **Avg Temp Glide (K)** | **Cap Rel to 410A (%)** | **COP Rel to 410A (%)** |
|---|---|---|---|---|---|---|---|---|---|---|---|
| | **R32** | **R125** | **CF₃I** | **R116** | | | | | | | |
| 410A | 50 | 50 | | | 2088 | 100 | 100 | 79.9 | 0.10 | 100.0 | 100.0 |
| CF₃I Blend | 49 | 11.5 | 39.5 | | 734 | 105 | 102 | 85.9 | 0.23 | 103.0 | 99.3 |
| Blend + 0.1% R-116 | 48.95 | 11.49 | 39.46 | 0.1 | 745 | 105 | 102 | 85.9 | 0.24 | 103.1 | 99.3 |
| Blend + 0.5% R-116 | 48.76 | 11.44 | 39.30 | 0.5 | 791 | 105 | 103 | 85.8 | 0.30 | 103.2 | 99.3 |
| Blend + 1% R-116 | 48.51 | 11.39 | 39.11 | 1 | 848 | 106 | 103 | 85.6 | 0.38 | 103.4 | 99.2 |
| Blend + 3% R-116 | 47.53 | 11.16 | 38.31 | 3 | 1078 | 107 | 104 | 84.9 | 0.67 | 104.2 | 98.9 |
| Blend + 5% R-116 | 46.55 | 10.93 | 37.53 | 5 | 1307 | 108 | 106 | 84.2 | 0.94 | 104.9 | 98.6 |

Results show the cooling capacity is improved by addition of HFC-23 or HFC-116 to the mixture of R-32/125/CF3I. The energy efficiency of the mixture is maintained at an acceptable level, the compressor discharge temperature remains similar and a low temperature glide (<2K) is maintained. All of this is achieved with a composition which is lower GWP than incumbent refrigerant R-410A.

## Claims

1. A composition comprising trifluoroiodomethane, difluoromethane, pentafluoroethane, and at least one of trifluoromethane and hexafluoroethane, wherein the trifluoroiodomethane is present in an amount of 25 weight percent to 50 weight percent, the difluoromethane is present in an amount of 35 weight percent to 50 weight percent, the pentafluoroethane is present in an amount of 5 weight percent to 15 weight percent, the trifluoromethane, if present, is present in an amount of 0.01 weight percent to 7 weight percent, and the hexafluoroethane, if present, is present in an amount of 0.01 weight percent to 12 weight percent, based on the total weight of the composition.

2. The composition of claim 1, comprising trifluoromethane and hexafluoroethane.

3. The composition of claim 1 or 2, wherein the global warming potential (GWP) of the composition is less than 1500, preferably less than 875.

4. The composition of any one of claims 1 to 3, further comprising 2,3,3,3-tetrafluoropropene or 1,3,3,3-tetrafluoropropene.

5. The composition of any one of claims 1 to 4, further comprising one or more components selected from the group consisting of lubricants, dyes, solubilizing agents, compatibilizers, stabilizers, tracers, anti-wear agents, extreme pressure agents, corrosion and oxidation inhibitors, metal surface energy reducers, metal surface deactivators, free radical scavengers, foam control agents, viscosity index improvers, pour point depressants, detergents, viscosity adjusters, and mixtures thereof.

6. The composition of claim 5, wherein the lubricant is selected from the group consisting of mineral oil, alkylbenzene, polyol esters, polyalkylene glycols, polyvinyl ethers, polycarbonates, perfluoropolyethers, synthetic paraffins, synthetic napthenes, polyalphaolefins, and combinations thereof.

7. A refrigeration, air conditioning, or heat pump system comprising the composition of any one of claims 1 to 6.

8. A method of making a refrigerant composition comprising mixing 25 weight percent to 50 weight percent trifluoroiodomethane, 35 weight percent to 50 weight percent difluoromethane, 5 weight percent to 15 weight percent pentafluoroethane, and at least one of 0.01 weight percent to 12 weight percent hexafluoroethane or 0.01 weight percent to 7 weight percent trifluoromethane, based on the total weight of the composition.

9. A method of making a refrigeration system coolant comprising blending
a) 25 weight percent to 50 weight percent trifluoroiodomethane, 35 weight percent to 50 weight percent difluoromethane, 5 weight percent to 15 weight percent pentafluoroethane, and at least one of hexafluoroethane in an amount of 0.01 weight percent to 12 weight percent or trifluoromethane in an amount of 0.01 weight percent to 7 weight percent, based on the total weight of the composition; and
b) a lubricant.

10. The method of claim 9, wherein the lubricant is selected from the group consisting of mineral oil, alkylbenzene, polyol esters, polyalkylene glycols, polyvinyl ethers, polycarbonates, perfluoropolyethers, synthetic paraffins, synthetic napthenes, polyalphaolefins, and combinations thereof.

11. The method of claim 10, wherein the lubricant includes the polyol ester or the polyalkylene glycol.

12. A method of replacing R-410A in a refrigeration, air conditioning, or heat pump system comprising providing the composition of any one of claims 1 to 6 to the system as a replacement for said R-410A.

## Patentansprüche

1. Zusammensetzung, umfassend Trifluoriodmethan, Difluormethan, Pentafluorethan und mindestens eines von Trifluormethan und Hexafluorethan, wobei das Trifluoriodmethan in einer Menge von 25 Gewichtsprozent bis 50 Gewichtsprozent vorliegt, das Difluormethan in einer Menge von 35 Gewichtsprozent bis 50 Gewichtsprozent vorliegt, das Pentafluorethan in einer Menge von 5 Gewichtsprozent bis 15 Gewichtsprozent vorliegt, das Trifluormethan, falls vorhanden, in einer Menge von 0,01 Gewichtsprozent bis 7 Gewichtsprozent vorliegt, und das Hexafluorethan, falls vorhanden, in einer Menge von 0,01 Gewichtsprozent bis 12 Gewichtprozent vorliegt, bezogen auf das Gesamtgewicht der Zusammensetzung.

2. Zusammensetzung nach Anspruch 1, umfassend Trifluormethan und Hexafluorethan.

3. Zusammensetzung nach Anspruch 1 oder 2, wobei das Treibhauspotential (THP) der Zusammensetzung weniger als 1 500, vorzugsweise weniger als 875, beträgt.

4. Zusammensetzung nach einem der Ansprüche 1 bis 3, ferner umfassend 2,3,3,3-Tetrafluorpropen oder 1,3,3,3-Tetrafluorpropen.

5. Zusammensetzung nach einem der Ansprüche 1 bis 4, ferner umfassend eine oder mehrere Komponenten, ausgewählt aus der Gruppe, die besteht aus Schmiermitteln, Farbstoffen, Lösungsvermittlern, Verträglichkeitsvermittlern, Stabilisatoren, Tracern, Antiverschleißmitteln, Extremdruckmitteln, Korrosions- und Oxidationshemmern, Metallflächenenergiereduzierern, Metallflächendeaktivatoren, Fängern freier Radikale, Schaumkontrollmitteln, Viskositätsindexverbesserern, Pourpointerniedrigern, Detergenzien, Viskositätseinstellern und Mischungen davon.

6. Zusammensetzung nach Anspruch 5, wobei das Schmiermittel aus der Gruppe ausgewählt ist, die besteht aus Mineralöl, Alkylbenzol, Polyolestern, Polyalkylenglykolen, Polyvinylethern, Polycarbonaten, Perfluorpolyethern, synthetischen Paraffinen, synthetischen Naphthenen, Polyalphaolefinen und Kombinationen davon.

7. Kühl-, Klimatisierungs- oder Wärmepumpensystem, umfassend die Zusammensetzung nach einem der Ansprüche 1 bis 6.

8. Verfahren zum Herstellen einer Kältemittelzusammensetzung, umfassend Vermischen von 25 Gewichtsprozent bis 50 Gewichtsprozent Trifluoriodmethan, 35 Gewichtsprozent bis 50 Gewichtsprozent Difluormethan, 5 Gewichtsprozent bis 15 Gewichtsprozent Pentafluorethan und mindestens einem von 0,01 Gewichtsprozent bis 12 Gewichtsprozent Hexafluorethan oder 0,01 Gewichtsprozent bis 7 Gewichtsprozent Trifluormethan, bezogen auf das Gesamtgewicht der Zusammensetzung.

9. Verfahren zum Herstellen eines Kühlsystem-Kühlmittels, umfassend Vermischen zu einem Blend von:
a) 25 Gewichtsprozent bis 50 Gewichtsprozent Trifluoriodmethan, 35 Gewichtsprozent bis 50 Gewichtsprozent Difluormethan, 5 Gewichtsprozent bis 15 Gewichtsprozent Pentafluorethan und mindestens einem von Hexafluorethan in einer Menge von 0,01 Gewichtsprozent bis 12 Gewichtsprozent oder Trifluormethan in einer Menge von 0,01 Gewichtsprozent bis 7 Gewichtsprozent, bezogen auf das Gesamtgewicht der Zusammensetzung; und
b) einem Schmiermittel.

10. Verfahren nach Anspruch 9, wobei das Schmiermittel aus der Gruppe ausgewählt ist, die besteht aus Mineralöl, Alkylbenzol, Polyolestern, Polyalkylenglykolen, Polyvinylethern, Polycarbonaten, Perfluorpolyethern, synthetischen Paraffinen, synthetischen Naphthenen, Polyalphaolefinen und Kombinationen davon.

11. Verfahren nach Anspruch 10, wobei das Schmiermittel den Polyolester oder das Polyalkylenglykol einschließt.

12. Verfahren zum Ersetzen von R-410A in einem Kühl-, Klimatisierungs- oder Wärmepumpensystem, umfassend Bereitstellen der Zusammensetzung nach einem der Ansprüche 1 bis 6 für das System als Ersatz für das R-410A.

## Revendications

1. Composition comprenant du trifluoroiodométhane, du difluorométhane, du pentafluoroéthane, et au moins l'un parmi le trifluorométhane et l'hexafluoroéthane, dans laquelle le trifluoroiodométhane est présent en une quantité de 25 pour cent en poids à 50 pour cent en poids, le difluorométhane est présent en une quantité de 35 pour cent en poids à 50 pour cent en poids, le pentafluoroéthane est présent en une quantité de 5 pour cent en poids à 15 pour cent en poids, le trifluorométhane, si présent, est présent en une quantité de 0,01 pour cent en poids à 7 pour cent en poids, et l'hexafluoroéthane, si présent, est présent en une quantité de 0,01 pour cent en poids à 12 pour cent en poids, sur la base du poids total de la composition.

2. Composition selon la revendication 1, comprenant du trifluorométhane et de l'hexafluoroéthane.

3. Composition selon la revendication 1 ou 2, dans laquelle le potentiel de réchauffement global (PRP) de la composition est inférieur à 1 500, de préférence inférieur à 875.

4. Composition selon l'une quelconque des revendications 1 à 3, comprenant en outre du 2,3,3,3-tétrafluoropropène ou du 1,3,3,3-tétrafluoropropène.

5. Composition selon l'une quelconque des revendications 1 à 4, comprenant en outre un ou plusieurs composants choisis dans le groupe constitué par les lubrifiants, les colorants, les agents solubilisants, les agents de compatibilité, les agents stabilisants, les traceurs, les agents anti-usure, les agents extrême pression, les inhibiteurs de corrosion et d'oxydation, les réducteurs d'énergie de surface des métaux, les désactivateurs de surface des métaux, les piégeurs de radicaux libres, les agents de contrôle du moussage, les améliorants d'indice de viscosité, les améliorants de point d'écoulement, les détergents, les ajusteurs de viscosité, et des mélanges de ceux-ci.

6. Composition selon la revendication 5, dans laquelle le lubrifiant est choisi dans le groupe constitué par les huiles minérales, les alkylbenzènes, les esters de polyols, les polyalkylène glycols, les éthers polyvinyliques, les polycarbonates, les perfluoropolyéthers, les paraffines synthétiques, les naphtènes synthétiques, les polyalphaoléfines, et des combinaisons de ceux-ci.

7. Système de réfrigération, de climatisation ou de pompe de chaleur comprenant la composition selon l'une quelconque des revendications 1 à 6.

8. Procédé de fabrication d'une composition réfrigérante comprenant le mélange de trifluoroiodométhane en une quantité de 25 pour cent en poids à 50 pour cent en poids, de difluorométhane en une quantité de 35 pour cent en poids à 50 pour cent en poids, de pentafluoroéthane en une quantité de 5 pour cent en poids à 15 pour cent en poids, et d'au moins l'un parmi l'hexafluoroéthane en une quantité de 0,01 pour cent en poids à 12 pour cent en poids et le trifluorométhane en une quantité de 0,01 pour cent en poids à 7 pour cent en poids, sur la base du poids total de la composition.

9. Procédé de fabrication d'un réfrigérant de système de réfrigération comprenant le mélange :
a) de trifluoroiodométhane en une quantité de 25 pour cent en poids à 50 pour cent en poids, de difluorométhane en une quantité de 35 pour cent en poids à 50 pour cent en poids, de pentafluoroéthane en une quantité de 5 pour cent en poids à 15 pour cent en poids, et d'au moins l'un parmi l'hexafluoroéthane en une quantité de 0,01 pour cent en poids à 12 pour cent en poids et le trifluorométhane en une quantité de 0,01 pour cent en poids à 7 pour cent en poids, sur la base du poids total de la composition ; et
b) d'un lubrifiant.

10. Procédé selon la revendication 9, dans lequel le lubrifiant est choisi dans le groupe constitué par les huiles minérales, les alkylbenzènes, les esters de polyols, les polyalkylène glycols, les éthers polyvinyliques, les polycarbonates, les perfluoropolyéthers, les paraffines synthétiques, les naphtènes synthétiques, les polyalphaoléfines, et des combinaisons de ceux-ci.

11. Procédé selon la revendication 10, dans lequel le lubrifiant comprend l'ester de polyol ou le polyalkylène glycol.

12. Procédé de remplacement du R-410A dans un système de réfrigération, de climatisation ou de pompe de chaleur comprenant la fourniture, au système, de la composition selon l'une quelconque des revendications 1 à 6 comme remplacement dudit R-410A.
